# EUROPEAN PATENT APPLICATION

(11) **EP 3 855 654 A1**
(43) Date of publication of application: **28.07.2021**
(21) Application number: 18935463.2
(22) Date of filing: 30.09.2018
(51) Int. Cl.: H04L 1/18

(54) **HYBRID AUTOMATIC REPEAT REQUEST PROCESSING METHOD, TERMINAL DEVICE AND STORAGE MEDIUM**

(71) Applicant: GUANGDONG OPPO MOBILE TELECOMMUNICATIONS CORP., LTD., Dongguan Guangdong 523860 (CN)
(72) Inventor: XU, Jing, Dongguan, Guangdong 523860 (CN); LIN, Yanan, Dongguan, Guangdong 523860 (CN); SHI, Cong, Dongguan, Guangdong 523860 (CN)
(74) Representative: Manitz Finsterwald Patent- und Rechtsanwaltspartnerschaft mbB
(86) International application number: PCT/CN2018/109211
(87) International publication number: WO 2020/062302

(57) **Abstract**

A method for processing HARQ is provided. The method includes the following. A terminal device retransmits data when a timer expires and no feedback information or scheduling information of the data is received at the terminal device, where a first HARQ ID corresponding to retransmission of the data is independent from a second HARQ ID corresponding to initial transmission of the data. Implementations further provide a terminal device and a storage medium.

## Description

### TECHNICAL FIELD

This disclosure relates to the technical field of wireless communication, and more particularly to a method for processing hybrid automatic repeat request (HARQ), a terminal device, and a storage medium.

### BACKGROUND

In pre-configured transmission technology for a new radio (NR) Rel-15 system, for HARQ, a terminal device transmits data in a specific HARQ process and starts a configured grant timer. When the configured grant timer expires and no feedback message or scheduling message is received at the terminal device, the terminal device determines that the data are correctly transmitted and releases the HARQ process. However, for HARQ, there is a problem of poor reliability due to the lack of explicit HARQ-acknowledgement (HARQ-ACK) feedback.

### SUMMARY

In order to solve the above technical problem, implementations provide a method and entity for processing a data packet and a storage medium, which can achieve power distribution under a PRACH scenario on an SCell.

In a first aspect, a method for processing HARQ is provided. The method includes the following. A terminal device retransmits data when a timer expires and no feedback information or scheduling information of the data is received at the terminal device, where a first HARQ ID corresponding to retransmission of the data is independent from a second HARQ ID corresponding to initial transmission of the data.

In a second aspect, a terminal device is provided. The terminal device includes a processing unit. The processing unit is configured to retransmit data when a timer expires and no feedback information or scheduling information of the data is received at the terminal device, where a first HARQ ID corresponding to retransmission of the data is independent from a second HARQ ID corresponding to initial transmission of the data.

In a third aspect, a terminal device is provided. The terminal device includes a processor and a memory configured to store computer programs that are operable with the processor. The processor is configured to execute the computer programs to perform the method described in the first aspect.

In a fourth aspect, a storage medium is provided. The storage medium is configured to store executable programs which, when executed by a processor, are operable with the processor to perform the method described in the first aspect.

According to the method for processing HARQ provided herein, when the timer expires and no feedback information or scheduling information of the data is received at the terminal device, the terminal device retransmits the data, where the first HARQ ID corresponding to retransmission of the data is independent from the second HARQ ID corresponding to initial transmission of the data. As such, the data based feedback information and/or scheduling information are introduced to data transmission, and data are retransmitted considering the timer, which improves reliability of a system. In addition, when the first HARQ ID corresponding to retransmission of the data is different from the second HARQ ID corresponding to initial transmission of the data, it is possible to reduce latency that is caused by waiting for a process with the same first HARQ ID corresponding to initial data transmission, for data retransmission.

### BRIEF DESCRIPTION OF THE DRAWINGS

FIG. 1 is a schematic structural diagram of a communication system according to implementations.
FIG. 2 is a schematic flowchart of a method for processing HARQ according to implementations.
FIG. 3 is a schematic diagram of available resources for data retransmission according to implementations.
FIG. 4 is a schematic diagram illustrating migration between buffers according to implementations.
FIG. 5 is a schematic structural diagram of a terminal device according to implementations.
FIG. 6 is a schematic diagram illustrating a hardware structure of an electronic device according to implementations.

### DETAILED DESCRIPTION

In order for better understanding of features and technical solutions of implementations, the following will describe in detail implementations with reference to the accompanying drawings. The accompanying drawings are intended for explaining, rather than limiting, the disclosure.

Implementations provide a method for processing HARQ, in which HARQ-ACK is introduced to HARQ processing methods in the related art. One of the HARQ processing methods in the related art is as follows. A terminal device sends data in a specific HARQ process and starts a configured grant timer. If feedback information or scheduling information is received before the configured grant timer expires, the terminal device processes the data according to an instruction of the feedback information or the scheduling information received. If no feedback information or scheduling information is received before the configured grant timer expires, that is, the terminal device determines that the data fail to be correctly received, however, there is currently no solution for data retransmission at the terminal device.

To this end, implementations provide a method for processing HARQ, which provides a solution for data retransmission at the terminal device, for a scenario in which no feedback information or scheduling information is received at the terminal device when the configured grant timer expires. The method provided herein is applicable to various communication systems, for example, a global system of mobile communication (GSM), a code division multiple access (CDMA) system, a wideband code division multiple access (WCDMA) system, a general packet radio service (GPRS) system, a long term evolution (LTE) system, an LTE frequency division duplex (LTE-FDD) system, an LTE time division duplex (LTE-TDD) system, a universal mobile telecommunication system (UMTS), a worldwide interoperability for microwave access (WiMAX) communication system, or a 5^{th} generation mobile network (5G) system.

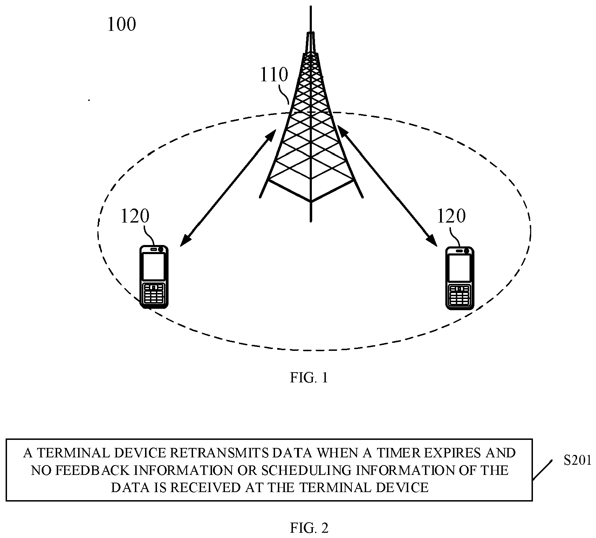

FIG. 1 illustrates a communication system 100 applied in implementations. As illustrated in FIG. 1, the communication system 100 may include a network device 110. The network device 110 may be a device that can communicate with a terminal device 120 (also referred to as "communication terminal" or "terminal"). The network device 110 can provide a communication coverage for a specific geographical area and communicate with terminal devices in the coverage area. The network device 110 may be a base transceiver station (BTS) in the GSM or in the CDMA system, or may be a NodeB (NB) in the WCDMA system, or may be an evolutional Node B (eNB or eNodeB) in the LTE system, or a radio controller in a cloud radio access network (CRAN). Alternatively, the network device may be a mobile switching center, a relay station, an access point, an in-vehicle device, a wearable device, a hub, a switch, a bridge, a router, a network-side device in a 5G network, or a network device in a future evolved public land mobile network (PLMN).

The communication system 100 further includes at least one terminal device 120 located in the coverage area of the network device 110. The "terminal device" referred to herein can include but is not limited to a device configured to communicate via a wired line, another data connection/network, and/or a wireless interface, a device which is part of another terminal device and configured to receive/transmit communication signals, or an Internet of things (IoT) device. Examples of the wired line may include, but are not limited to, a public switched telephone network (PSTN), a digital subscriber line (DSL), a digital cable, a direct connection cable. Examples of the wireless interface may include, but are not limited to, a wireless interface for a cellular network, a wireless local area network (WLAN), a digital television network (such as a digital video broadcasting-handheld (DVB-H) network), a satellite network, an amplitude modulation-frequency modulation (AM-FM) broadcast transmitter. A terminal device configured to communicate via a wireless interface may be called a "wireless communication terminal", a "wireless terminal", and/or a "mobile terminal". Examples of a mobile terminal may include, but are not limited to, a satellite telephone or cellular telephone, a personal communication system (PCS) terminal integrated with functions of cellular radio telephone, data processing, fax, and/or data communication, a personal digital assistant (PDA) equipped with radio telephone, pager, Internet/Intranet access, web browsing, notebook, calendar, and/or global positioning system (GPS) receiver, and/or a conventional laptop, a handheld receiver, or other electronic devices equipped with radio telephone receiver. The terminal device may refer to an access terminal, a user equipment (UE), a subscriber unit, a subscriber station, a mobile station, a remote station, a remote terminal, a mobile device, a user terminal, a terminal, a wireless communication device, a user agent, or a user device. The access terminal may be a cellular radio telephone, a cordless telephone, a session initiation protocol (SIP) telephone, a wireless local loop (WLL) station, a PDA, a handheld device with wireless communication functions, a computing device, other processing devices coupled with a wireless modem, an in-vehicle device, a wearable device, a terminal device in the 5G network, a terminal device in the future evolved PLMN, etc.

As an example, terminal devices 120 can communicate with each other through device to device (D2D) communication.

As an example, the 5G system or 5G network can also be referred to as an NR system or NR network.

FIG. 1 exemplarily illustrates one network device and two terminal devices. The communication system 100 may also include multiple network devices, and there can be other numbers of terminal devices in a coverage area of each of the network devices, which is not limited herein.

The communication system 100 may further include other network entities such as a network controller, a mobile management entity, or the like, and the disclosure is not limited in this regard.

According to implementations, a device with communication functions in a network/system can be referred to as a "communication device". Taking the communication system 100 illustrated in FIG. 1 as an example, the communication device may include the network device 110 and the terminal device(s) 120 that have communication functions. The network device 110 and the terminal device(s) 120 can be the devices described above and will not be repeated herein. The communication device may further include other devices such as a network controller, a mobile management entity, or other network entities in the communication system 100, the disclosure is not limited in this regard.

FIG. 2 is a schematic flowchart of a method for processing HARQ according to implementations. As illustrated in FIG. 2, the method includes the following.

At block S201, a terminal device retransmits data when a timer expires and no feedback information or scheduling information of the data is received at the terminal device.

In some implementations, when the terminal device begins to send data to a network device, the terminal device starts the timer. As an example, the timer is a configured grant timer, and a period of the configured grant timer is pre-defined. If the terminal device has received from the network device the feedback information and/or scheduling information before the configured grant timer expires, the terminal device processes the data according to an instruction of the feedback information and/or scheduling information. If the terminal device has not received from the network device the feedback information and/or scheduling information when the configured grant timer expires, the terminal device determines that the data are not correctly received by the network device, and therefore the data need to be retransmitted. Here, "configured grant" refers to semi-static transmission configured by high layer signaling, or a transmission that is configured by higher layer signaling and dynamically triggered by physical layer signaling.

The data that are not correctly received by the network device are referred to as data initially transmitted. The feedback information is a HARQ-ACK message sent by the network device. The term "initially transmitted" or "initial transmission" is not limited to the first transmission of data and may also refer to any transmission of data before data retransmission.

According to implementations, the manner in which the terminal device retransmits the data at least includes one of the following.
1) The terminal device retransmits the data on an available resource that is the nearest to a timeout time of the timer.

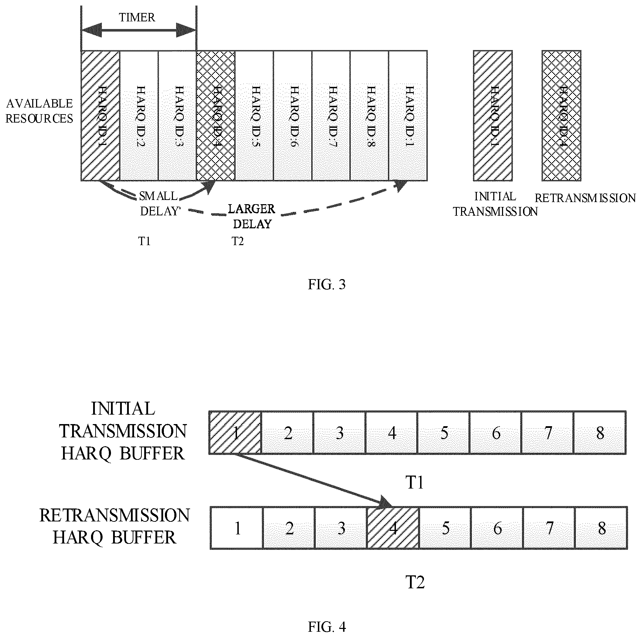

   FIG. 3 is a schematic diagram of available resources for data retransmission according to implementations. The terminal device transmits data on an available resource with HARQ ID 1 and starts the timer. When the timer expires, the terminal device retransmits the data. As illustrated in FIG. 3, the HARQ ID of the available resource that is the nearest to the timeout time of the timer is 4, and thus the terminal device retransmits the data on the available resource with HARQ ID 4. Data transmission performed by the terminal device on the available resource with HARQ ID 1 is initial transmission. In this way, instead of waiting for a next process with the same HARQ ID 1 corresponding to initial data transmission, the terminal device can quickly initiate data retransmission on the available resource with HARQ ID 4, which can reduce latency of a system. By reusing an existing semi-static resource / semi-persistent resource, it is possible to avoid extra resource reservation.
2) The terminal device retransmits the data on an available resource which is a first threshold away from a timeout time of the timer.
   Still taking FIG. 3 as an example, the terminal device transmits data on the available resource with HARQ ID 1 and starts the timer. When the timer expires, the terminal device retransmits the data. As illustrated in FIG. 3, the HARQ ID of an available resource corresponding to the timeout time of the timer is 3. As an example, the first threshold is one resource unit. The terminal device retransmits the data on an available resource subsequent to the available resource with HARQ ID 4, that is, the terminal device retransmits the data on an available resource with HARQ ID 5. In this way, instead of initiating data retransmission on a next available resource with HARQ ID 1, the terminal device can quickly initiate data retransmission on the available resource with HARQ ID 5, which can reduce latency of a system and on the other hand, avoid extra resource reservation.
3) The terminal device retransmits the data on an available resource that is randomly selected.
   Still taking FIG. 3 as an example, the terminal device transmits data on the available resource with HARQ ID 1 and starts the timer. When the timer expires, the terminal device retransmits the data. As illustrated in FIG. 3, the HARQ ID of the available resource corresponding to the timeout time of the timer is 3. The terminal device randomly selects a resource from among available resources subsequent to the available resource with HARQ ID 3, for example, the terminal device retransmits the data on an available resource with HARQ ID 6. The available resource can be randomly selected through a random selection function, but implementations are not limited thereto. As such, instead of initiating data retransmission on a next available resource with HARQ ID 1, the terminal device can quickly initiate data retransmission on the available resource with HARQ ID 6, which, in addition to reducing latency of a system, is possible to avoid extra resource reservation. Since the available resource for data retransmission is randomly selected, it is possible to avoid a second collision with the terminal device that clashed during initial transmission.
4) The terminal device retransmits the data on an available resource that is randomly selected from among available resources which are at least a first threshold away from a timeout time of the timer.

Still taking FIG. 3 as an example, the terminal device transmits the data on the available resource with HARQ ID 1 and starts the timer. When the timer expires, the terminal device retransmits the data. As illustrated in FIG. 3, the HARQ ID of the available resource corresponding to the timeout time of the timer is 3. As an example, the first threshold is equal to one resource unit. The terminal device randomly selects an available resource from among available resources subsequent to the available resource with HARQ ID 4, for example, the terminal device retransmits the data on the available resource with HARQ ID 6. The available resource can be randomly selected through a random selection function, but implementations are not limited thereto. As such, instead of initiating data retransmission on a next available resource with HARQ ID 1, the terminal device can quickly initiate data retransmission on the available resource with HARQ ID 6, which can not only reduce latency of a system but also avoid extra resource reservation. Since the terminal device randomly selects the available resource for data retransmission, it is possible to avoid a second collision with the terminal device that clashed during initial transmission.

In some implementations, a first HARQ ID corresponding to retransmission of the data is independent from a second HARQ ID corresponding to initial transmission of the data. In other words, the first HARQ ID is the same as the second HARQ ID, or the first HARQ ID is different from the second HARQ ID. For example, based on the above manners in which the terminal device retransmits the data, the terminal device randomly selects an available resource with first HARQ ID 4 for data retransmission. Since the data are initially transmitted on an available resource with second HARQ ID 1, the first HARQ ID of the available resource for data retransmission can remain unchanged as 4. Alternatively, the first HARQ ID of the available resource for data retransmission can be changed into 1, which is the same as the HARQ ID corresponding to initial transmission of the data, that is, the first HARQ ID of the available resource for data retransmission can be changed from 4 to 1. It should be noted that, here, only the first HARQ ID of the available resource for data retransmission is changed, while the available resource for data retransmission per se is still the available resource that is the nearest to the timeout time of the timer.

In some implementations, the first HARQ ID corresponding to retransmission of the data is independent from the second HARQ ID corresponding to initial transmission of the data. In other words, the first HARQ ID is the same as the second HARQ ID, or the first HARQ ID is different from the second HARQ ID. For example, in terms of manner 1) described above in which the terminal device retransmits the data, the terminal device retransmits the data on the available resource with first HARQ ID 4. Since the data are initially transmitted on an available resource with second HARQ ID 1, the first HARQ ID of the available resource for data retransmission can remain unchanged as 4. Alternatively, the first HARQ ID of the available resource for data retransmission can be changed into 1, which is the same as the HARQ ID corresponding to initial transmission of the data, that is, the first HARQ ID of the available resource for data retransmission can be changed from 4 to 1. It should be noted that, here, only the first HARQ ID of the available resource for data retransmission is changed, while the available resource for data retransmission per se is still the available resource that is the nearest to the timeout time of the timer.

In some implementations, the available resource includes an available semi-static resource or an available semi-persistent resource. Accordingly, transmission of the data may be a semi-static transmission or a semi-persistent transmission.

In some implementations, the first HARQ ID is related to at least one of: a time domain location of the transmission of the data, a first transmission opportunity of the data in an automatic retransmission block, a semi-static transmission/semi-persistent transmission period, available process data, a semi-static resource/semi-persistent resource configuration specific HARQ offset. The automatic retransmission block includes all automatically retransmitted data. The first transmission opportunity of the data in an automatic retransmission block refers to the first transmission opportunity when there are multiple transmission opportunities for the data. For example, the data have four transmission opportunities in the automatic retransmission block, and accordingly the first HARQ ID is related to the first transmission opportunity in the four transmission opportunities.

Data corresponding to the first HARQ ID are newly-transmitted data. As an example, in HARQ information corresponding to the first HARQ ID, data are identified as newly-transmitted data. Alternatively, data corresponding to the first HARQ ID are retransmitted data. As an example, in HARQ information corresponding to the first HARQ ID, data are identified as retransmitted data.

In some implementations, the method further includes the following. The terminal device migrates the data to a first buffer corresponding to the first HARQ ID from a second buffer corresponding to the second HARQ ID. FIG. 4 is a schematic diagram illustrating migration between buffers according to implementations. In initial data transmission, data transmitted on an available resource with first HARQ ID 1 are buffered into the first buffer with buffer ID 1. In data retransmission, data are transmitted on an available resource with second HARQ ID 4, and the data in the first buffer with buffer ID 1 corresponding to the first HARQ ID are migrated to a buffer with buffer ID 4 corresponding to the second HARQ ID.

In some implementations, after operations at block S201, the following can be conducted. The terminal device sends information of the second HARQ ID.

As an example, the terminal device sends to a network device the information of the second HARQ ID through explicit indication. For example, in data retransmission, the terminal device directly indicates the second HARQ ID corresponding to initial transmission of the data, such that the network device can, upon receiving the retransmitted data, perform data merging according to the information of the second HARQ ID. Alternatively, the terminal device sends to the network device the information of the second HARQ ID through implicit indication. For example, the terminal device sends to the network device a demodulation reference signal (DMRS) indicative of the HARQ ID, such that the network device can, upon receiving the retransmitted data, perform data merging according to the information of the second HARQ ID.

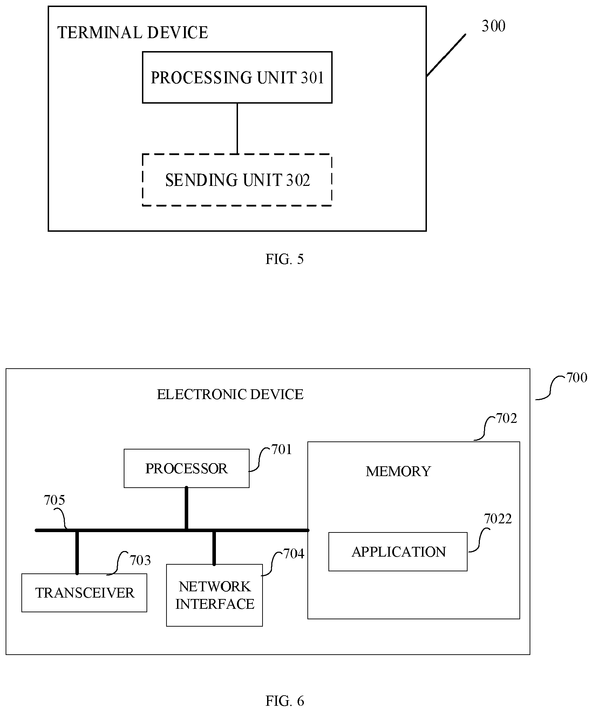

Based on the method for processing HARQ described above, implementations further provide a terminal device. FIG. 5 is a schematic structural diagram of a terminal device 300 according to implementations. As illustrated in FIG. 5, the terminal device includes a processing unit 301. The processing unit 301 is configured to retransmit data when a timer expires and no feedback information or scheduling information of the data is received at the terminal device, where a first HARQ ID corresponding to retransmission of the data is independent from a second HARQ ID corresponding to initial transmission of the data.

In some implementations, the processing unit 301 is configured to retransmit the data on an available resource that is the nearest to a timeout time of the timer.

In some implementations, the processing unit 301 is configured to retransmit the data on an available resource which is a first threshold away from a timeout time of the timer.

In some implementations, the processing unit 301 is configured to retransmit the data on an available resource that is randomly selected.

In some implementations, the processing unit 301 is configured to retransmit the data on an available resource that is randomly selected from among available resources which are at least a first threshold away from a timeout time of the timer.

In some implementations, the first HARQ ID is independent from the second HARQ ID. The first HARQ ID is the same as the second HARQ ID, or the first HARQ ID is different from the second HARQ ID.

In some implementations, the processing unit 301 is further configured to migrate the data to a first buffer corresponding to the first HARQ ID from a second buffer corresponding to the second HARQ ID.

In some implementations, the available resource includes an available semi-static resource or an available semi-persistent resource.

In some implementations, transmission of the data is a semi-static transmission or a semi-persistent transmission.

In some implementations, the first HARQ ID is related to at least one of: a time domain location of the transmission of the data, a first transmission opportunity of the data in an automatic retransmission block, a semi-static transmission/semi-persistent transmission period, available process data, and a semi-static resource/semi-persistent resource configuration specific HARQ offset.

In some implementations, data corresponding to the first HARQ ID are newly-transmitted data.

In other implementations, data corresponding to the first HARQ ID are retransmitted data.

In some implementations, the terminal device further includes a sending unit 302. The sending unit 302 is configured to send information of the second HARQ ID.

As an example, the sending unit 302 sends to a network device the information of the second HARQ ID through explicit indication. For example, in data retransmission, the sending unit 302 directly indicates the second HARQ ID corresponding to initial transmission of the data, such that the network device can, upon receiving the retransmitted data, perform data merging according to the information of the second HARQ ID.

Alternatively, the sending unit 302 sends to the network device the information of the second HARQ ID through implicit indication. For example, the sending unit 302 sends to the network device a DMRS indicative of the HARQ ID, such that the network device can, upon receiving the retransmitted data, perform data merging according to the information of the second HARQ ID.

Implementations further provide a terminal device. The terminal device includes a processor and a memory configured to store computer programs that are operable with the processor. The processor is configured to execute the computer programs to perform the method for power distribution by the terminal device described above.

FIG. 6 is a schematic diagram illustrating a hardware structure of an electronic device (terminal device) according to implementations. The electronic device 700 includes at least one processor 701, a memory 702, and at least one network interface 704. Various components of the electronic device 700 are coupled together via a bus system 705. It can be understood that, the bus system 705 is configured for connection and communication between these components. Besides a data bus, the bus system 705 further includes a power bus, a control bus, and a status signal bus. However, for the sake of clarity, various buses are illustrated as the bus system 705 in FIG. 6.

It can be understood that, the memory 702 according to implementations may be a volatile memory or a non-volatile memory, or may include both the volatile memory and the non-volatile memory. The non-volatile memory may be a read only memory (ROM), a programmable read only memory (programmable ROM, PROM), an erasable programmable read only memory (erasable PROM, EPROM), an electrically erasable programmable read only memory (electrically EPROM, EEPROM), a ferromagnetic random access memory (FRAM), a flash memory, a magnetic surface memory, an optical disc, or a compact disc read only memory (CD-ROM). The magnetic surface memory may be a magnetic disk memory or a magnetic tape memory. The volatile memory can be a RAM that acts as an external cache. By way of example but not limitation, many forms of RAM are available, such as a static random access memory (static RAM, SRAM), a synchronous static random access memory (SSRAM), a dynamic random access memory (dynamic RAM, DRAM), a synchronous dynamic random access memory (synchronous DRAM, SDRAM), a double data rate SDRAM (DDRSDRAM), an enhanced synchronous dynamic random access memory (ESDRAM), a sync-link dynamic random access memory (SLDRAM), and a direct rambus random access memory (direct rambus RAM, DRRAM). The memory 702 described herein is intended to include, but is not limited to, these and any other suitable types of memory.

The memory 702 according to implementations is configured to store various types of data to support operations of the electronic device 700. Examples of these data may include any computer program run on the electronic device 700, such as an application 7022. Programs for performing the method provided in implementations can be included in the application 7022.

The method disclosed in the foregoing implementations is applicable to the processor 701, or may be performed by the processor 701. The processor 701 may be an integrated circuit chip with signal processing capabilities. During implementation, each step of the foregoing method may be completed by an integrated logic circuit of hardware in the processor 701 or an instruction in the form of software. The processor 701 may be a general-purpose processor, a digital signal processor (DSP), other programmable logic devices (PLD), discrete gates or transistor logic devices, discrete hardware components, or the like. The methods, steps, and logic blocks disclosed in implementations can be implemented or executed by the processor 701. The general purpose processor may be a microprocessor, or the processor may be any conventional processor or the like. The steps of the method disclosed in implementations may be directly implemented as a hardware decoding processor, or may be performed by hardware and software modules in the decoding processor. The software module can be located in a storage medium. The storage medium is located in the memory 702. The processor 701 reads information in the memory 702, and completes the steps of the method described above with the hardware thereof.

According to implementations, the electronic device 700 can be implemented by one or more of an application specific integrated circuit (ASIC), the DSP, the PLD, a complex programmable logic device (CPLD), a field programmable gate array (FPGA), the general-purpose processor, a controller, a microcontroller unit (MCU), a microprocessor unit (MPU), or other electronic components, to perform the foregoing method.

Implementations further provide a computer readable storage medium configured to store computer programs.

The computer readable storage medium is applicable to the terminal device of implementations. The computer programs are operable with a computer to execute operations of the foregoing method that can be performed by the terminal device, which will not be repeated herein for the sake of simplicity.

The disclosure is described herein with reference to schematic flowcharts and/or block diagrams of methods, apparatuses (systems), and computer program products according to the implementations. It should be understood that each flow and/or block in the flowchart and/or block diagram, and a combination of flow and/or block in the flowchart and/or block diagram can be implemented by computer program instructions. These computer program instructions may be provided to a general purpose computer, a special purpose computer, an embedded processor, or a processor of other programmable data processing apparatuses to form a machine, such that devices for implementing functions specified by one or more flows in the flowchart and/or one or more blocks in the block diagram may be generated by executing the instructions with the processor of the computer or other programmable data processing apparatuses.

The computer program instructions may also be stored in a computer-readable memory that can direct the computer or other programmable data processing apparatuses to operate in a given manner, such that the instructions stored in the computer-readable memory produce a manufactured article including an instruction device, and the instruction device implements the functions specified by one or more flows in the flowchart and/or one or more blocks in the block diagram.

The computer program instructions may also be loaded onto the computer or other programmable data processing apparatuses, such that a series of process steps may be executed on the computer or other programmable apparatuses to produce processing implemented by the computer, so that the instructions executed on the computer or other programmable apparatuses provide steps for implementing the functions specified by one or more flows in the flowchart and/or one or more blocks in the block diagram.

While the disclosure has been described in connection with certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

## Claims

1. A method for processing hybrid automatic repeat request (HARQ), comprising:
retransmitting data, by a terminal device, when a timer expires and no feedback information or scheduling information of the data is received at the terminal device, wherein
a first HARQ ID corresponding to retransmission of the data is independent from a second HARQ ID corresponding to initial transmission of the data.

2. The method of claim 1, wherein retransmitting the data, by the terminal device, comprises:
retransmitting the data, by the terminal device, on an available resource that is the nearest to a timeout time of the timer.

3. The method of claim 1, wherein retransmitting the data, by the terminal device, comprises:
retransmitting the data, by the terminal device, on an available resource which is a first threshold away from a timeout time of the timer.

4. The method of claim 1, wherein retransmitting the data, by the terminal device, comprises:
retransmitting the data, by the terminal device, on an available resource that is randomly selected.

5. The method of claim 1, wherein retransmitting the data, by the terminal device, comprises:
retransmitting the data, by the terminal device, on an available resource that is randomly selected from among available resources which are at least a first threshold away from a timeout time of the timer.

6. The method of any of claims 1 to 5, wherein the first HARQ ID being independent from the second HARQ ID comprises:
the first HARQ ID is the same as the second HARQ ID; or
the first HARQ ID is different from the second HARQ ID.

7. The method of any of claims 1 to 6, further comprising:
migrating the data, by the terminal device, to a first buffer corresponding to the first HARQ ID from a second buffer corresponding to the second HARQ ID.

8. The method of any of claims 2 to 5, wherein the available resource comprises one of an available semi-static resource and an available semi-persistent resource.

9. The method of any of claims 1 to 8, wherein transmission of the data is a semi-static transmission or a semi-persistent transmission.

10. The method of any of claims 1 to 9, wherein the first HARQ ID is related to at least one of:
a time domain location of the transmission of the data;
a first transmission opportunity of the data in an automatic retransmission block;
a semi-static transmission/semi-persistent transmission period;
available process data; and
a semi-static resource/semi-persistent resource configuration specific HARQ offset.

11. The method of any of claims 1 to 10, wherein data corresponding to the first HARQ ID are newly-transmitted data.

12. The method of any of claims 1 to 10, wherein data corresponding to the first HARQ ID are retransmitted data.

13. The method of any of claims 1 to 12, further comprising:
sending, by the terminal device, information of the second HARQ ID.

14. A terminal device, comprising:
a processing unit configured to retransmit data when a timer expires and no feedback information or scheduling information of the data is received at the terminal device, wherein
a first HARQ ID corresponding to retransmission of the data is independent from a second HARQ ID corresponding to initial transmission of the data.

15. The terminal device of claim 14, wherein the processing unit is configured to retransmit the data on an available resource that is the nearest to a timeout time of the timer.

16. The terminal device of claim 14, wherein the processing unit is configured to retransmit the data on an available resource which is a first threshold away from a timeout time of the timer.

17. The terminal device of claim 14, wherein the processing unit is configured to retransmit the data on an available resource that is randomly selected.

18. The terminal device of claim 14, wherein the processing unit is configured to retransmit the data on an available resource that is randomly selected from among available resources which are at least a first threshold away from a timeout time of the timer.

19. The terminal device of any of claims 14 to 18, wherein the first HARQ ID being independent from the second HARQ ID comprises:
the first HARQ ID is the same as the second HARQ ID; or
the first HARQ ID is different from the second HARQ ID.

20. The terminal device of any of claims 14 to 19, wherein the processing unit is further configured to migrate the data to a first buffer corresponding to the first HARQ ID from a second buffer corresponding to the second HARQ ID.

21. The terminal device of any of claims 16 to 18, wherein the available resource comprises one of an available semi-static resource and an available semi-persistent resource.

22. The terminal device of any of claims 14 to 21, wherein transmission of the data is a semi-static transmission and a semi-persistent transmission.

23. The terminal device of any of claims 14 to 22, wherein the first HARQ ID is related to at least one of:
a time domain location of the transmission of the data;
a first transmission opportunity of the data in an automatic retransmission block;
a semi-static transmission/semi-persistent transmission period;
available process data; and
a semi-static resource/semi-persistent resource configuration specific HARQ offset.

24. The terminal device of any of claims 14 to 23, wherein data corresponding to the first HARQ ID are newly-transmitted data.

25. The terminal device of any of claims 14 to 23, wherein data corresponding to the first HARQ ID are retransmitted data.

26. The terminal device of any of claims 14 to 25, further comprising:
a sending unit configured to send information of the second HARQ ID.

27. A terminal device, comprising:
a processor; and
a memory configured to store computer programs that are operable with the processor, wherein
the processor is configured to execute the computer programs to perform the method of any of claims 1 to 13.

28. A storage medium configured to store executable programs which, when executed by a processor, are operable with the processor to perform the method of any of claims 1 to 13.
